(19) Europäisches Patentamt / European Patent Office / Office européen des brevets

(11) **EP 3 310 535 B1**

(12) **EUROPEAN PATENT SPECIFICATION**

(45) Date of publication and mention
of the grant of the patent:
**19.06.2019 Bulletin 2019/25**

(21) Application number: **16754165.5**

(22) Date of filing: **20.06.2016**

(51) Int Cl.:
**B25J 9/00** *(2006.01)*    **B25J 9/16** *(2006.01)*

(86) International application number:
**PCT/CZ2016/000068**

(87) International publication number:
**WO 2016/206658 (29.12.2016 Gazette 2016/52)**

(54) **A METHOD FOR CONTROL OF A SPHERICAL MOTION OF A BODY**

VERFAHREN ZUR STEUERUNG EINES SPHÄRISCHEN BEWEGUNGSABLAUFS EINES KÖRPERS

PROCÉDÉ PERMETTANT LA COMMANDE D'UN MOUVEMENT SPHÉRIQUE D'UN CORPS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2015 CZ 20150413**

(43) Date of publication of application:
**25.04.2018 Bulletin 2018/17**

(73) Proprietor: **CVUT V Praze, Fakulta Strojní 166 07 Praha 6 (CZ)**

(72) Inventors:
• **VALÁSEK, Michael**
  **14300 Praha 4 (CZ)**
• **STORKÁN, Jaroslav**
  **43401 Most (CZ)**

(74) Representative: **Novotny, Karel**
**Zufanova 2/1099**
**163 00 Praha 6 (CZ)**

(56) References cited:
**WO-A2-2009/056079    DE-A1- 19 955 520**
**FR-A1- 2 672 836**

• **MICHAEL VALASEK ET AL: "Hexasphere-Redundantly Actuated Parallel Spherical Mechanism as a New Concept of Agile Telescope", ADVANCES IN ASTRONOMY, vol. 2010, no. 6, 1 January 2010 (2010-01-01), pages 1-6, XP055222409, ISSN: 1687-7969, DOI: 10.1109/70.163788**

## Description

Technical Field of the Invention

The invention involves a method for control of a spherical motion of a body connected with a frame through a spherical joint arranged on a shank connecting the body with the frame, where the shank is sectional and the spherical joint with at least two rotational degrees of freedom is arranged between the first part of the shank, which is firmly fixed to the frame, and the second part of the shank, which is firmly fixed to the body, and by means of actuating arms with linear actuators at a number of four arranged along the frame, where the arms are connected to the body through spherical joints with at least two rotational degrees of freedom and to the linear actuators through spherical joints with at least two rotational degrees of freedom.

State-of-the-art

The controlled spherical motion of a body is important in many applications, for example for tilting heads of machining devices or adjusting positions of telescopes and antennas. Such a movement is performed today either through mechanisms with a series kinematic structure, mostly based on gimbal, or mechanisms with a parallel kinematic structure. Mechanisms with a series kinematic structure have a large moveability, thereupon a range of 180 degrees in two rotations, but they are mass, their dynamic capabilities are low and they do not allow a continuous movement from one position to another in all positions. On the other hand, mechanisms with a parallel kinematic structure have a limited moveability, thereupon a range less than 90° in two rotations usually, but they feature substantially lower weight, have higher dynamic capabilities and they enable a continuous movement from all positions to all the subsequent positions.
Tilting heads of machining devices were successfully solved with the help of parallel kinematic structures in PCT WO 00/25976 and EP1123175B1 patents for Sprint Z3 tilting head made by DS Technologie company (called EcoSpeed), where the ability to move continuously between all positions with higher dynamics was achieved. Singular positions do not allow a larger angle range in these mechanisms. The improvement of this state-of-the-art can be achieved through application of redundant (excessive) number of arms with actuators, the number of which is higher than the number of degrees of freedom. Such a mechanism with a parallel kinematic structure for a spherical motion is described in an article by Kurtz, R., Hayward, V.: Multiple-Goal Kinematic Optimization of a Parallel Spherical Mechanism with Actuator Redundancy, IEEE Transactions on Robotics and Automation, 8(1992), 5, pp. 644-651, where there are 4 parallel arms used for a motion of a platform fixed to a frame through a spherical joint on a shank extended from the frame. This solution enables to increase a range of achievable angle positions substantially but it does not allow reaching a range of 90° and more, in addition, there is a lowered manipulability near extreme positions. This limitation emerges by two reasons. Both there are collisions occurring between the platform and the shank extending from the frame in extreme positions near 90° and the excessive number of 4 parallel arms is inadequate for a sufficient distance from singular positions within all the working area. Therefore a solution was proposed in CZ 302911 patent (see also the international application WO 2009/056079 A2), removing the previous imperfections and reaching the motion range more than 90 degrees. However, this solution (called HexaSphere) needs four and more actuators, usually six actuators.
An alternative mechanism with a parallel kinematic structure, which enables to reach a platform tilting angles range up to 90° is Octapod (Valasek, M., Sika, Z., Bauma, V., Vampola, T.: The Innovative Potential of Redundantly Actuated PKM, In: Neugebauer, R.: Proc. of Parallel Kinematics Seminar 2004, IWU FhG, Chemnitz 2004, pp. 365-384) and Metrom (Schwaar, M., Jaehnert, T., Ihlenfeldt, S.: Mechatronic Design, Experimental Property Analysis and Machining Strategies for a 5-Strut-PKM, In: Neugebauer, R.: Proc. of Parallel Kinematics Seminar 2002, IWU FhG, Chemnitz 2002, pp. 671-681). A disadvantage of Octapod is that arms are positioned all around the platform. A disadvantage of Metrom is lowered manipulability near extreme positions.
The aim of this invention is a method for a controlled spherical motion of bodies based on mechanisms with a parallel kinematic structure, which would achieve a moveability consonant to mechanisms with a series kinematic structure, thereupon a range up to 200° in two rotations while preserving all advantages of mechanisms with a parallel kinematic structure, whereas requiring a lower number of actuators in comparison with similar mechanisms. At the same time, another goal of this invention is to achieve higher accuracy of adjusting of a body's positions.

Subject Matter of the Invention

The subject matter of a method for control of a spherical motion of a body with a tool connected with a frame through a spherical joint arranged on a shank connecting the body with the frame, where the shank is sectional and the spherical joint with at least two rotational degrees of freedom is arranged between the first part of the shank, which is firmly fixed to the frame, and the second part of the shank, which is firmly fixed to the body, and by means of actuating arms with linear actuators at a number of four arranged on the frame, where the arms are connected to the body through spherical joints with at least two rotational degrees of freedom and to the linear actuators through spherical joints with at least two rotational degrees of freedom lies in that firstly the body with a tool is through a move of trolleys turned to the required direction of the tool axis determined by an azimuth and elevation, secondly the body with a tool is through a move of trolleys turned about the tool axis, so that it reduces the angle between the axis of the arms, determined by the join of the respective spherical joints on the platform and on the linear actuator, and a plane determined by the centre of the spherical joint and the axis of the respective linear guide of the trolley on the frame, thirdly the body with a tool is through a move of trolleys turned also about the axis of the tool by another $\alpha$ angle, so that it increases a distance from singular positions and prevents a collision of the arms at the same time.

In a limiting case, the body with the tool is through a move of trolleys turned about the axis of the tool by another a angle, so that the axis of the arms determined by the join of the respective spherical joints lies in a plane determined by the centre of the spherical joint and the axis of the respective linear guide of the trolley on the frame.

The advantage of this method of control consists in creation of the sectional shank which enables rotating the body by 90° and more without collisions with the shank and in application of a low number of arms with actuators, in spite of their low number enabling to remove an occurrence of singular positions and to provide a sufficient distance from them within all the working area of the body.

Overview of Figures in Drawings

The device for a body's spherical motion is schematically depicted in the attached Figures, where

Fig. 1 represents a scheme of a basic arrangement of the body connected to the frame by a spherical joint and performing a controlled spherical motion with a help of linear actuators in parallel arms,
Fig. 2 represents a vertical projection of the body as depicted in Fig. 1,

Examples of the Embodiments of the Invention

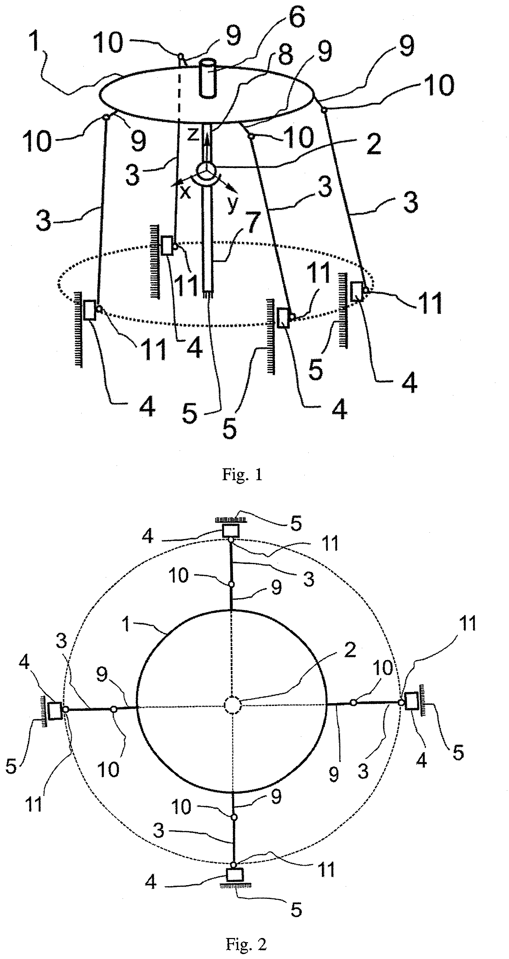

As it is evident in Fig.1, platform-body 1 is connected to frame 5 through a shank, the first part 7 of which is firmly fixed to frame 5 and its second part 8 is firmly fixed to body 1. Platform-body 1 carries machining tool 6, the axis of which is perpendicular to platform-body 1 and passes through its centre. The first part 7 of the shank can possibly form one component together with frame 5 and the second part 8 may form one component with body 1. Both parts 7, 8 of the shank are connected together by spherical joint 2 which enables the body's 1 motion towards frame 5. Body 1 and frame 5 are connected to one another through parallel actuating arms 3, which are fitted with linear actuators 4 for draw-out movement of actuating arms 3. These parallel arms 3 have invariable constant lengths and in the given embodiment they have congruent lengths and linear actuators 4 are arranged along a cylinder with the axis passing through spherical joint 2 symmetrically in 90 degrees. They are connected to body 1 by spherical joints 10 on shanks 9, which are arranged along platform-body 1 of a circular shape symmetrically in 90 degrees. The axis of tool 6 passes through the centre of this circle and is perpendicular to the plane formed by centres of spherical joints 10. Shanks 9 favourably prevent a collision between arms 3 and body 1 when moving, but they are not necessary for the embodiment. Parallel actuating arms 3 are connected to linear actuators 4 through spherical joints 11. A controlled spherical motion of body 1 is achieved by a change in positions of linear actuators 4 in the guides on frame 5, leading to a change in positions of joints 11 of arms 3. The spherical motion of body 1 originates from a change in three turnings of body 1, which can be described by an azimuth, elevation and own rotation. Linear actuators 4 can be e.g. realized as trolleys on a linear guide attached to frame 5 with a linear actuator consisting of a ball screw or a linear electric actuator. Spherical joints 2, 10, 11 consist of joints with at least two rotational degrees of freedom. The number of parallel arms 3 with drives 4 is four and is redundant, which means that the number of parallel actuating arms 3 is four and is higher than the number of degrees of freedom of body 1 determined by two turnings. By this, singular positions are excluded from the working area of the spherical motion of body 1. However, this does not apply for extreme positions, where the mechanism approximates the condition of singular positions.

Traditionally, such a parallel spherical mechanism is controlled in a way that the platform is tilted in all positions so that arms 3 remain above the guides of linear trolleys 4. This means that it reduces the angle between the axis of arms 3, determined by the join of respective spherical joints 10 and 11, and a plane determined by the centre of spherical joint 2 and the axis of the respective linear guide of trolley 4 on frame 5, by which the axis of arms 3 gets almost into this plane and a danger of a collision of arms 3 between one another or to shanks 7 and 8 of spherical joint 2 is prevented.

If possible, an optimal condition is that the axis of arm 3 determined by the join of respective spherical joints 10 and 11 of arm 3 lies in the plane determined by the centre of spherical joint 2 and the axis of the respective linear guide of trolley 4 on frame 5 respective to the given arm 3. This is an accurate geometrical condition for an optimal condition of positions of arms 3 towards the respective axes of the linear guides of trolleys 4 on frame 5, however, this cannot always be met. For the practical use the exact fulfilling is not necessary, though. It is enough that it reduces the angle between the axis of arms 3 and a plane determined by the centre of spherical joint 2 and the axis of the respective linear guide of trolley 4 on frame 5, so that arms 3 remain above the guides of linear trolleys 4.

Exclusion of occurrence of singular positions in extreme positions is achieved in a way that firstly platform-body 1 with tool 6 is turned using precession $\psi$ and nutation $\vartheta$ into final directing the axis of tool 6 to the required, and thus prescribed, azimuth and elevation. This is performed by moving linear trolleys 4, so that platform-body 1 is positioned by the transformation matrix between frame 5 and platform-body 1 using the first two Euler angles

$$T_{51,I}=T_{\varphi Z}(\psi)T_{\varphi X}(\vartheta) \qquad\qquad (R1),$$

where $\mathbf{T}_{51,I}$ is a kinematic transformation matrix for a description of setting of platform-body 1 towards frame 5 after the first phase of the control of a spherical motion of a body, $\mathbf{T}_{\varphi Z}(\psi)$ is a kinematic transformation matrix of the rotation about the axis z in the coordinate system in Fig. 1 by the angle of precession $\psi$ realizing the azimuth, $\mathbf{T}_{\varphi X}(\vartheta)$ is a kinematic transformation matrix of the rotation about already partly turned axis x by $\psi$ angle in the coordinate system in Fig. 1 by the angle of nutation $\vartheta$ realizing the elevation.

Secondly, platform-body 1 with tool 6 is turned by its own rotation $\varphi$, so that actuating arms 3 get back above the guides of linear trolleys 4, as described above. This is performed by moving linear trolleys 4, so that platform-body 1 is positioned by the transformation matrix $T_{\varphi Z}(\varphi)$ after the first phase using the third Euler angle $\varphi$ chosen

$$\varphi=-\psi. \qquad\qquad (R2)$$

The resulting transformation matrix between frame 5 and platform-body 1 after the second phase is

$$T_{51,II}=T_{\varphi Z}(\psi)T_{\varphi X}(\vartheta)T_{\varphi Z}(\varphi) \qquad\qquad (R3),$$

where $\mathbf{T}_{\varphi Z}(\varphi)$ is a kinematic transformation matrix of the rotation about axis z turned already by angles $\psi$ and $\vartheta$ in the coordinate system in Fig. 1 by angle $\varphi$ representing the own rotation of platform-body 1, the own rotation is chosen $\varphi=-\psi$ for ensuring that arms 3 remain above the guides of linear trolleys 4.

This control prevents collisions of arms 3, but does not prevent approximation of the state of singular positions. Keeping a distance from singular positions is achieved by a new method of control of a spherical motion of a body determined by the third phase of the control of a spherical motion of a body. Thirdly, platform-body 1 with tool 6 is turned using another own rotation $\alpha$, so that actuating arms 3 optimally deflect from the guides of linear trolleys 4 without their subsequent collisions. This is performed by moving linear trolleys 4, so that platform-body 1 is positioned by transformation matrix $T_{\varphi Z}(\alpha)$ after the second phase using another additional angle $\alpha$, which is a function of a position of orientation of platform-body 1 and is optimized for each position for the largest distance from singular positions without a collision of arms 3, thus angle $\alpha$ is a function of the previous rotation by angles $\psi$ and $\vartheta$ and is different in each position

$$\alpha=\alpha(\psi,\vartheta) \qquad\qquad (R4)$$

The resulting transformation matrix between frame 5 and platform-body 1 after the third phase is

$$T_{51,III}=T_{\varphi Z}(\psi)T_{\varphi X}(\vartheta)T_{\varphi Z}(\varphi)\,T_{\varphi Z}(\alpha) \qquad\qquad (R5),$$

where $\mathbf{T}_{\varphi Z}(\alpha)$ is a kinematic transformation matrix of the rotation about axis z already turned by angles $\psi$, $\vartheta$, $\varphi=-\psi$ in the coordinate system in Fig. 1 by another angle $\alpha$ representing the own rotation of platform-body 1 about the axis of tool 6.

This can be described that the axis of tool 6 is positioned to the demanded azimuth and elevation at meeting the condition that the axes of the arms determined by the join of respective spherical joints 10 and 11 lie in the respective plane determined by the axis of the linear guide of trolley 4 on frame 5 and by the centre of spherical joint 2 ensured by its own rotation $\varphi=-\psi$, and subsequently platform-body 1 is also turned about the axis of tool 6 by another angle $\alpha$, which is different in each position. This leads to an advantage that the described mechanism with only four arms has a sufficient distance from singular positions within all the working area.

The use of the sectional shank composed of the first and the second part 7 and 8 enables to turn body 1 by more than 90°. To achieve such a turn, the length of the first part 7 of the shank fixed to frame 5 should be longer than a distance of the edge of body 1 from a point where the second part 8 of the shank is fixed to body 1. Adapting the length of the second part of shank 8, a varied angle range of rotation over 90° of body 1 can be achieved. Shanks 9 have a similar function to prevent a collision of platform-body 1 and arms 3 during their relative motion.

Fig. 2 shows a vertical projection of the device as depicted in Fig. 1 in the direction of parallel axes of linear actuators 4, placed on a cylinder with an axis passing through spherical joint 2. Here is an obvious condition for the embodiment as depicted in Fig. 1, where arms 3 are arranged with guides of trolleys 4 symmetrically around spherical joint 2, which means that projections of arms 3 mutually have angles of 90 degrees and that the guides of trolleys in Fig. 2 lie along the circle around the projection of spherical joint 2.

However, generally arms 3 can be arranged asymmetrically, which means that in Fig. 2 the projections of arms 3 contain angles different from 90 degrees or that the guides of trolleys 4 do not lie along the circle around the projection of spherical joint 2 or that the guides of trolleys 4 are not mutually parallel or that spherical joints 10 do not lie along the circle around the projection of spherical joint 2. Also, the lengths of arms 3 can be different or machining tool 6 is attached to platform-body 1 asymmetrically.

A great advantage of the described arrangement is that a motion of platform-body 1 is possible within two rotations in a range up to 200 degrees, while preserving all advantages of mechanisms with a parallel kinematic structure using only three actuators. The achieved moveability is large and a satisfactory distance from singular positions within the entire working area is achieved, leading also to a favourable transmission of forces between tool 6 and actuators 4 and to an increase in accuracy of positioning of tool 6. This is a great progress in comparison with previous solutions, where five to six actuators were needed or a motion was not possible within such a large range even with four actuators or was very limited with three actuators.

The described solution variants may be combined with each other. If a parallelism or perpendicularity of axes or planes is given, then this condition is realized through the manufacture of the device and this manufacturing realization of the accurate condition of parallelism or perpendicularity is always met only within manufacturing tolerances. Spherical joints may be realized in various ways, for example as ball joints or more connected rotational joints. The position of actuators is computer-controlled.

**Claims**

1. A method for the control of a spherical motion of a body (1) with a tool (6) connected with a frame (5) through a spherical joint (2) arranged on a shank connecting the body (1) with the frame (5), wherein the shank is sectional and the spherical joint (2) with at least two rotational degrees of freedom is arranged between a first part (7) of the shank, which is firmly fixed to the frame (5), and a second part (8) of the shank, which is firmly fixed to the body (1), and by means of actuating arms (3) with linear actuators (4) at a number of four arranged on the frame (5), wherein the arms (3) are connected to the body (1) through spherical joints (10) with at least two rotational degrees of freedom and to the linear actuators (4) through spherical joints (11) with at least two rotational degrees of freedom, **characterized in that** the body (1) with its tool (6) is firstly turned through a move of trolleys of the linear actuators (4) to the required direction of the axis of the tool (6) determined by the azimuth and elevation, **in that** the body (1) with its tool (6) is secondly turned through a move of trolleys of the linear actuators (4) about the axis of the tool (6) so that it reduces the angle between the axis of the arms (3), determined by the join of the respective spherical joints (10) and (11), and a plane determined by the centre of the spherical joint (2) and the axis of the respective linear guide of the trolley of the respective linear actuator (4) on the frame (5), and **in that** the body (1) with its tool (6) is thirdly also turned through a move of trolleys of the linear actuators (4) about the axis of the tool (6) by another angle, so that it increases a distance from singular positions and prevents a collision of the arms (3) at the same time.

2. A method for the control of a spherical motion of a body as described in Claim 1, **characterized in that** the body (1) with its tool (6) is turned through a move of trolleys of the linear actuators (4) about the axis of the tool (6) by another angle, so that the axis of the arms (3) determined by the join of the respective spherical joints (10) and (11) lies in a plane determined by the centre of the spherical joint (2) and the axis of the respective linear guide of the trolley of the respective linear actuator (4) on the frame (5).

**Patentansprüche**

1. Die Steuerungsverfahren der sphärischen Bewegung einer Gehäuse (1) mit einem Werkzeug (6) gekoppelte mit einem Rahmen (5) durch ein Kugelgelenk (2) angeordnetes am Schaft, welcher die Gehäuse (1) mit dem Rahmen (5) verbindet, weil der Schaft geteilt ist und das Kugelgelenk (2) mit mindestens zwei rotatorischen Freiheitsgraden zwischen dem ersten Teil (7) des Schaft, welcher fest am Rahmen (5) eingespannt ist, und dem zweiten Teil (8) des Schaft, welcher fest zur Gehäuse (1) eingespannt ist, angeordnet ist, und durch die Steuerungsarme (3) mit Verschiebeantrieben (4) in vier angeordneten am Rahmen (5), weil die Arme (3) zur Gehäuse (1) durch Kugelgelenke (10) mit mindestens zwei rotatorischen Freiheitsgraden gekoppelt sind und zu Verschiebeantrieben (4) durch Kugelgelenke (11) mit mindestens zwei rotatorischen Freiheitsgraden gekoppelt sind, **dadurch gekennzeichnet, daß** die Gehäuse (1) mit dem Werkzeug (6) durch Verschiebung der Wagen (4) erstens in die gewünschte Richtung der Achse des Werkzeuges (6) gegebene durch den Azimut (Seitenwinkel) und Elevation (Höhenwinkel) gedreht ist, zweitens die Gehäuse (1) mit dem Werkzeug (6) durch Verschiebung der Wagens (4) rundum die Achse des Werkzeuges (6) so gedreht ist, daß vermindert sich der Winkel der Achse der Arme (3) gegebene durch die Verbindungslinie der relevanten Kugelgelenke (10) und (11) mit der Ebene gegebene durch den Mittelpunkt des Kugelgelenks (2) und die Achse der relevanten Verschiebeführung des Wagen (4) am Rahmen (5), drittens die Gehäuse (1) mit dem Werkzeug (6) durch Verschiebung der Wagen (4) weiter wieder um die Achse des Werkzeug (6) um den weiteren $\alpha$ Winkel so gedreht ist, daß der Abstand von den singularischen Stellungen vergrößert sich und gleichzeitig die Kollision der Arme (3) vermieden wird .

2. Das Verfahren für Steuerung der sphärischen Bewegung der Gehäuse nach dem Patentanspruch 1, **dadurch gekennzeichnet, daß** die Gehäuse (1) mit dem Werkzeug (6) durch Verschiebung der Wagen (4) so um die Achse des Werkzeug (6) um ein weiteres Winkel $\alpha$ so gedreht ist, das die Achse der Arme (3) gegebene durch die Verbindungslinie der relevanten Kugelgelenke (10) und (11), liegt in der Ebene gegebene durch den Mittelpunkt des Kugelgelenks (2) und die Achse der relevanten Verschiebeführung des Wagens (4) am Rahmen (5).

## Revendications

1. La méthode de contrôle du mouvement sphérique d'un corps (1) avec un outil (6), relié au châssis (5) via une articulation sphérique (2), disposée sur une tige reliant le corps (1) au châssis (5), la tige étant divisée et une articulation sphérique (2) avec au moins deux degrés rotatifs de liberté est disposée entre la première partie (7) de la tige solidement fixée au châssis (5), et la seconde partie (8) de la tige, solidement fixée au corps (1), et au moyen des bras de commande (3) avec quatre entraînements coulissantes (4) disposés au châssis (5), les bras (3) étant reliés au corps (1) par des articulations sphériques (10) avec au moins deux degrés rotatifs de liberté et aux commandes coulissantes (4) étant relié par des articulations sphériques (11) avec au moins deux degrés rotatifs de liberté, **caractérisé en ce que** le corps (1) avec l'outil (6) est, au moyen de l'avancement des chariots (4), premièrement tourné dans le sens souhaité de l'axe de l'outil (6), déterminée par azimut et élévation, deuxièment, le corps (1) avec un outil (6) est, au moyen de l'avancement des chariots (4), tourné autour de l'axe de l'outil (6) de sorte que l'angle de l'axe des bras (3), déterminés par une droite de fonction des articulations sphériques respectives (10) et (11) avec le plan donné par le centre de l'articulation sphérique (2) et par l'axe du guidage coulissant respectif du chariot (4) au châssis (5), troisièmement, le corps (1) avec un outil (6) est en conséquence de l'avancement des chariots (4) tourné autour de l'axe de l'outil (6) d'un autre angle $\alpha$ de sorte que la distance des positions singulaires augmente tout en évitant une collision des bras (3).

2. La manière de la commande du mouvement sphérique du corps selon la revendication 1, **caractérisée en ce que** le corps (1) avec un outil (6) est, en conséquence de l'avancement des chariots (4), tourné autour de l'axe de l'outil (6) d'un autre angle $\alpha$ de sorte que l'axe des bras (3), déterminés par une droite de fonction des articulations sphériques respectives (10) et (11), est situé au plan, déterminé par le centre d'une articulation sphérique (2) et par l'axe du guidage coulissant respectif du chariot (4) au châssis (5).

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0025976 A
- EP 1123175 B1
- CZ 302911
- WO 2009056079 A2

### Non-patent literature cited in the description

- **KURTZ, R. ; HAYWARD, V.** Multiple-Goal Kinematic Optimization of a Parallel Spherical Mechanism with Actuator Redundancy. *IEEE Transactions on Robotics and Automation,* 1992, vol. 8 (5), 644-651
- **VALASEK, M. ; SIKA, Z. ; BAUMA, V. ; VAMPOLA, T.** The Innovative Potential of Redundantly Actuated PKM. *Neugebauer, R.: Proc. of Parallel Kinematics Seminar 2004, IWU FhG,* 2004, 365-384
- **SCHWAAR, M. ; JAEHNERT, T. ; IHLENFELDT, S.** Mechatronic Design, Experimental Property Analysis and Machining Strategies for a 5-Strut-PKM. *Neugebauer, R.: Proc. of Parallel Kinematics Seminar 2002, IWU FhG,* 2002, 671-681